(19) Europäisches Patentamt
European Patent Office
Office européen des brevets

(11) **EP 3 602 210 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(21) Anmeldenummer: **18712204.9**

(22) Anmeldetag: **20.03.2018**

(51) Int Cl.:
***G05B 13/04*** *(2006.01)*

(86) Internationale Anmeldenummer:
**PCT/EP2018/056996**

(87) Internationale Veröffentlichungsnummer:
**WO 2018/172341 (27.09.2018 Gazette 2018/39)**

(54) **VERFAHREN ZUR BESTIMMUNG VON REGELUNGSPARAMETERN FÜR EIN HYDRAULIKSYSTEM**

METHOD FOR DETERMINING CLOSED-CONTROL PARAMETERS FOR A HYDRAULIC SYSTEM

PROCÉDÉ DE DÉTERMINATION DE PARAMÈTRES DE RÉGULATION D'UN SYSTÈME HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2017 AT 502232017**

(43) Veröffentlichungstag der Anmeldung:
**05.02.2020 Patentblatt 2020/06**

(73) Patentinhaber: **B&R Industrial Automation GmbH 5142 Eggelsberg (AT)**

(72) Erfinder:
• **ZEHETLEITNER, Kurt**
**4209 Engerwitzdorf (AT)**
• **WICK, Lukas**
**3200 Obergrafendorf (AT)**
• **GRIESSLER, Leopold**
**4020 Linz (AT)**

(74) Vertreter: **Patentanwälte Pinter & Weiss OG Prinz-Eugen-Straße 70 1040 Wien (AT)**

(56) Entgegenhaltungen:
**DE-A1- 4 446 296        US-A1- 2016 033 944
US-B1- 9 240 819**

**Beschreibung**

Die gegenständliche Erfindung betrifft ein Verfahren zur Bestimmung von Regelungsparametern einer Regelungseinheit eines Hydrauliksystems. Weiters betrifft die gegenständliche Erfindung ein Hydrauliksystem umfassend einen Servoantrieb mit einem Motor und einer Pumpe.

Hydrauliksysteme bestehen aus hydraulischen Erzeugern und hydraulischen Verbrauchern. Als hydraulischer Erzeuger dient in der Regel ein Servoantrieb, als hydraulische Verbraucher können zum Beispiel Hydraulikzylinder, Hydromotoren, hydraulische Kapazitäten, etc. dienen. Als Servoantrieb wird in diesem Zusammenhang üblicherweise eine Kombination aus Motor und Pumpe verstanden, wobei der Motor von einem Umrichter versorgt wird. Die Drehzahl des Motors des Servoantriebs ist hochdynamisch variabel und steuert einen von der Pumpe geförderten hydraulischen Volumenstrom. Damit wird wiederum eine Änderung eines hydraulischen Ist-Systemdrucks im Hydrauliksystem erreicht. Die Regelung des Systemdrucks ist somit bei allen hydraulischen Verbrauchern essentiell. Üblicherweise weist eine Regelung eines Hydrauliksystems eine PID-Struktur oder eine PID-ähnliche Struktur mit zusätzlichen Filtern auf. Die dafür notwendigen Regelungsparameter müssen nach derzeitigem Stand der Technik durch Ausprobieren, d.h. durch iteratives manuelles Tuning am Hydrauliksystem ermittelt werden. Dies ist einerseits sehr zeitaufwendig, da immer wieder Tests durchgeführt werden müssen und erfordert andererseits erfahrenes Fachpersonal. So ist die tatsächliche Justierung der Regelungsparameter selbst bei Vorliegen einer ausführlicheren Dokumentation sehr stark vom jeweiligen Anwender abhängig, wobei hierfür einige Faustformelverfahren, wie z.B. die Methode nach Ziegler Nichols existieren. Je nach verwendeter Regelungsstruktur ändern sich die Anzahl der zu bestimmenden Parameter und damit der Aufwand zur Einstellung der Regelung. Eine Reglerauslegung ist daher manuell aufgrund unzureichender Kenntnis der Streckendynamik über den gesamten Frequenzbereich nur schwer möglich. Zudem kann eine Nachjustierung der Regelungsparameter auch im laufenden Betrieb notwendig sein, z.B. wenn sich Randbedingungen ändern, beispielsweise durch Verschleiß von Bauteilen. Die Bestimmung der Regelungsparameter ist wie erwähnt prinzipiell aufwendig. Zudem ist es schwierig die Regelungsparameter auszulegen, dass eine gewünschte Dynamik erreicht wird. Die Dynamik beschreibt das Ein-/Ausgangsverhalten des Hydraulikystems, d.h. hier die Antwort des Ist-Systemdrucks auf eine Änderung des Soll-Systemdrucks. Weist das Hydrauliksystem eine hohe Dynamik auf, so kann beispielsweise ein Ist-Systemdruck auch schnellen Änderungen des Soll-Systemdrucks hinreichend folgen.

Die DE 198 42 565 A1 offenbart ein Hydrauliksystem mit mehreren Kreiselpumpen. Beim notwendigen Zu- und Wegschalten einzelner Kreiselpumpen entstehen unerwünschte Druckstöße, welche sich im System grundlegend als Störung auswirken. Die Druckstöße werden jedoch in der DE 198 42 565 A1 verwendet um die Regelungsparameter des PID-Reglers zu parametrieren. Es werden eine Übertragungsfunktion in Form eines PTn-Glieds, d.h. mit einer Zählerordnung von Null, und daraus die Regelungsparameter ermittelt. PTn-Glieder, d.h. eine Hintereinanderschaltung von n PT1-Gliedern, sind in der Regel nicht schwingungsfähig. Auftretende Druckstöße lassen sich zwar gut erfassen, sind jedoch als Anregung eines Systems zur Systemidentifikation für eine Reglerparametrierung nicht gut geeignet, weshalb eine rasche und exakte Parametrierung nicht möglich ist. Die DE 44 46 296 A1 offenbart ein Hydrauliksystem, wobei ein Verbrennungsmotor und eine Pumpe vorgesehen sind. Die Pumpe stellt eine variable Verdrängungspumpe dar; ein Stelleingriff erfolgt über einen Winkel der Taumelscheibe.

Es ist somit die Aufgabe der gegenständlichen Erfindung, ein Verfahren und eine Vorrichtung anzugeben, mit dem die Parametrierung der Regelungsparameter für eine Regelung eines Hydrauliksystems, umfassend einen Servoantrieb, weitgehend automatisiert, rasch und genau erfolgt.

Erfindungsgemäß wird ein Ist-Systemdruck eines hydraulischen Verbrauchers des Hydrauliksystems durch eine vorgegebene Soll-Drehzahl eines Servoantriebs, umfassend einen Motor und eine Pumpe, geregelt, wobei eine Ist-Drehzahl des Servoantriebs der vorgegebenen Soll-Drehzahl folgt, wobei der Soll-Drehzahl ein Anregungssignal aufgeschaltet und der sich dabei einstellende Ist-Systemdruck gemessen wird. Aus der Ist-Drehzahl und/oder der Soll-Drehzahl und dem Ist-Systemdruck wird die Dynamik des Hydrauliksystems ermittelt und weiter werden aus der ermittelten Dynamik die Regelungsparameter berechnet. Weiters weist der Servoantrieb erfindungsgemäß eine von einer Steuerungseinheit vorgegebene Soll-Drehzahl auf, wobei eine Ist-Drehzahl des Servoantriebs der vorgegebenen Soll-Drehzahl folgt, und umfasst das Hydrauliksystem einen hydraulischen Verbraucher der einen Ist-Systemdruck aufweist, welcher durch die vorgegebene Soll-Drehzahl geregelt wird, wobei eine Regelungseinheit vorgesehen ist, die ausgestaltet ist der Soll-Drehzahl ein Anregungssignal aufzuschalten und den sich dabei einstellenden Ist-Systemdruck des Hydrauliksystems zu messen, aus der Ist-Drehzahl und/oder der Soll-Drehzahl und dem Ist-Systemdruck die Dynamik des Hydrauliksystems zu ermitteln und aus der ermittelten Dynamik die Regelungsparameter der Regelungseinheit zu berechnen. Es ist somit möglich die Regelungsparameter der Regelungseinheit des Hydrauliksystems in einem Bruchteil der Zeit, welche für ein manuelles Tuning notwendig wäre, zu ermitteln. Darüber hinaus ist der Ablauf der Ermittlung der Regelungsparameter reproduzierbar und erfolgt unabhängig vom jeweiligen Anwender, insbesondere auch automatisiert. Das erfindungsgemäße Verfahren ermöglicht es ein in den dynamischen Eigenschaften unbekanntes Hydrauliksystem zu identifizieren. Durch das Aufschalten eines Anregungssignals auf die Soll-Drehzahl des Servoantriebs kann das unbekannte Hydrauliksystem für die Identifizierung gut dynamisch angeregt werden Das bedeutet, dass das Hydrauliksystem eine "Blackbox" darstellt, dessen innere Struktur nicht bekannt ist bzw. nicht bekannt sein muss. Es wird also auf eine Untersuchung der Eingangs-Ausgangsbeziehungen beschränkt, wobei jegliche innere Eigenschaften bzw. dynamische Parameter nicht genutzt werden, selbst wenn diese vorab bekannt wären.

Da ein externes Anregungssignal auf die Soll-Drehzahl aufgeschaltet wird, kann das Anregungssignal frei gewählt werden. Damit ist es möglich spezielle, für die Anregung besonders geeignete, z.B. breitbandige, Anregungssignale aufzuschalten, um die Reglerparameter besonders rasch und genau zu parametrieren.

Vorteilhafterweise kann aus der ermittelten Dynamik zusätzlich ein Kompensationsfilter für die Regelungseinheit parametriert werden. Da das erfindungsgemäße Verfahren es ermöglicht die Regelungsparameter durch Messungen im laufenden Prozess an aktuelle Prozessgegebenheiten anzupassen, kann somit bei Bedarf auch ein Kompensationsfilter automatisch parametriert werden. Die bereits identifizierte Dynamik des Hydrauliksystems kann nach einem ungewünschten Verhalten in bestimmten Frequenzbereichen (z.B. starkes Resonanzverhalten) untersucht und weiters verstärkt oder gedämpft werden. Damit wird einerseits eine deutliche Geräuschreduktion und andererseits eine höherer Dynamikbereich ermöglicht.

Kompensationsfilter dienen dazu unerwünschtes Verhalten im Frequenzbereich, zum Beispiel ein Resonanzverhalten bei einer bestimmten Frequenz zu unterdrücken oder im umgekehrten Fall bei Antiresonanzverhalten die Streckenverstärkung bei dieser Frequenz zu heben. Durch Vorgabe des Soll-Systemdrucks, und der Soll-Drehzahl des Servoantriebs und durch Beaufschlagung eines Anregungssignals auf die Soll-Drehzahl wird das Hydrauliksystem angeregt. Im Zuge dessen wird über den Ist-Systemdruck und die Ist-Drehzahl und/oder die Soll-Drehzahl Information über die Dynamik der Regelstrecke erhalten. Mittels dieser erhaltenen Information werden weiter alle nötigen Einstellparameter der Regelungseinheit berechnet. Alternativ kann auch eine Anzahl Regelungsparameter durch einen Anwender vorgegeben werden und die weiteren notwendigen Regelungsparameter erfindungsgemäß berechnet werden. Unter Verwendung des erfindungsgemäßen Verfahrens ergeben sich diverse Vorteile: So wird einerseits die Prozedur des Einstellens der Regelungsparameter der Regelungseinheit wesentlich beschleunigt. Zudem ist durch den möglichen automatisierten Vorgang das Ergebnis reproduzierbar und nicht mehr vom konkreten Anwender abhängig. Bei entsprechender Vorbereitung kann das Verfahren zudem auch von Nicht-Experten angewandt werden.

Vorteilhafterweise wird der Soll-Drehzahl vor der Beaufschlagung mit dem Anregungssignal eine konstante Anfangsdrehzahl vorgegeben, woraufhin sich im Hydrauliksystem als Ist-Systemdruck ein Anfangsdruck einstellt. Damit wird ein für die Ist-Drehzahl und damit auch dem Ist-Systemdruck ein Arbeitspunkt eingestellt

Vorteilhafterweise ist der hydraulische Verbraucher ein Hydraulikzylinder, insbesondere ein Differentialhydraulikzylinder.

Der Ist-Systemdruck kann somit einen Druck eines Hydraulikzylinder beschreiben, vorstellbar wäre auch der Druck eines Hydromotors, etc.

Das der Anfangsdrehzahl beaufschlagte Anregungssignal stellt in der Regel ein breitbandiges Signal dar. Besonders geeignet ist eine Kombination aus sprungförmiger Anregung, harmonischer Signale mit ansteigender Frequenz und impulsförmigen Signalen. Daher wird vorteilhafterweise als Anregungssignal ein Rechtecksignal, ein harmonisches Signal - vorzugsweise mit steigender Frequenz, Impulse oder ein Mischsignal daraus verwendet.

Zur Beschreibung der Dynamik des Hydrauliksystems können unterschiedliche Darstellungen verwendet werden. Aus dem aufgezeichneten Systemeingang, d.h. der Ist-Drehzahl und/oder der Soll-Drehzahl, und dem Systemausgang, d.h. dem Ist-Systemdruck, wird die Übertragungsfunktion ermittelt. Die identifizierte Übertragungsfunktion, welche die Systemdynamik beschreibt stellt also den Zusammenhang zwischen dem Systemeingang, d.h. der Ist-Drehzahl und/oder der Soll-Drehzahl, und dem Systemausgang, d.h. dem Ist-Systemdruck, dar. So kann vorteilhafterweise die Dynamik des Hydrauliksystems durch eine Übertragungsfunktion beschrieben werden.

Die Übertragungsfunktion, d.h. die Identifikation der Reglerstrecke kann mithilfe bekannter Verfahren wie zum Beispiel der Fast-Fourier-Transformation (FFT) oder der Methode der kleinsten Fehlerquadrate (Least Squares LSQ) ermittelt bzw. angenähert werden, wobei auch andere Verfahren, wie beispielsweise das Ziegler-Nichols-Verfahren zur Identifikation der Reglerstrecke herangezogen werden können. Die Fast-Fourier-Transformation dient dazu ein Signal in seine Frequenzanteile zu zerlegen. Angewandt auf den Eingang und Ausgang des vorliegenden Systems, d.h. hier die Ist-Drehzahl bzw. die Soll-Drehzahl und den Ist-Systemdruck, kann daraus auf das Übertragungsverhalten im Frequenzbereich geschlossen werden, was für den weiteren Entwurf der Regelungsparameter herangezogen werden kann. Die Methode der kleinsten Fehlerquadrate, (Least Squares Verfahren, LSQ) hingegen ist ein Standardverfahren zur Ausgleichsrechnung. Es kann dazu verwendet werden eine Näherung zur Übertragungsfunktion zu schätzen.

Auf die so erhaltene Dynamik des Hydrauliksystems kann vorteilhafterweise ein Frequenzkennlinienentwurf-Verfahrens angewendet werden um die Regelungsparameter im Frequenzbereich zu errechnen. Beim Frequenzkennlinienentwurf-Verfahren erfolgt die Ermittlung von Regelungsparametern auf Basis von Anforderungen an das Einschwingverhalten der Antworten des geschlossenen Regelkreises auf gewisse ausgewählte Testfunktionen als Vorgabeparameter, wie z.B. Sprünge des Soll-Systemdrucks, welche wiederum in Anforderungen an ein Bode-Diagramm des offenen Kreises des dynamischen Hydrauliksystems übertragen werden. Anforderungen an den geschlossenen Regelkreis stellen zum Beispiel die Anstiegszeit und das Überschwingen der Sprungantwort des dynamischen Hydrauliksystems dar. Mithilfe dieses Verfahrens können somit aus Kenngrößen der Sprungantwort des geschlossenen Regelkreises (Vorgabeparameter) die Regelungsparameter berechnet werden. Die Vorgabeparameter beschreiben also die Sprungantwort des Hydrauliksystems, d.h. wie schnell der Ist-Systemdruck nach einem Sprung des Soll-Systemdrucks den Soll-Systemdruck erreicht hat.

Die Auswahl der geeignetsten Methode zur Ermittlung der Regelungsparameter hängt in der Regel von der Struktur des zu parametrisierenden Reglers, d.h. von den zu ermittelnden Regelungsparametern selbst ab. So können die Regelungsparameter beispielsweise eines PID-Reglers, wie auch eines linear-quadratischen Regler (LQR) bestimmt werden. Ein linear-quadratischer Regler, auch Riccati-Regler genannt, ist ein Zustandsregler für ein lineares dynamisches System, dessen Rückführmatrix über die Minimierung eines quadratischen Kostenfunktionals ermittelt wird, woraufhin der Ist-Systemdruck auf den Solldruck geregelt wird.

Sowohl die Fast-Fourier-Transformation (FFT), das Least Square Verfahren (LSQ), das Frequenzkennlinienentwurf-Verfahren, als auch linear-quadratische Regler (LQR) sind hinreichend bekannt, weswegen diese an dieser Stelle nicht im Detail beschrieben werden.

Falls eine zusätzliche Filterung (Ist-Druck-Filterung, Kompensationsfilter o.ä.) im Regelkreis vorteilhaft ist, wird dies dem Bediener signalisiert und automatisch ausgelegt.

Der Benutzer kann je nach Anwendungsfall entscheiden ob ein Überschwingen des Ist-Systemdrucks zugelassen wird, wodurch ein schneller Druckanstieg möglich ist, oder ob kein Überschwingen erlaubt ist, wodurch der Anstieg des Ist-Systemdrucks stärker gedämpft wird. Ist kein Überschwingen erwünscht, so werden die Regelungsparameter derart ausgelegt, dass der Regler "sanfter" reagiert d.h. bei einem Sprung des Soll-Systemdrucks die Stellgröße nicht so aggressiv erhöht wird, um den Ist-Systemdruck auf den Sollsystemdruck anzugleichen. Damit wird ein Überschwingen größtenteils vermieden.

Weiters kann über einen intuitiv leicht verständlichen Parameter, die Anstiegszeit des Soll-Systemdrucks nach einem Sprung je nach gewünschter Geschwindigkeit parametriert werden. Der ausgelegte Regler kann somit unter Analyse der Sprungantworten im geschlossenen Regelkreis getestet werden, woraufhin die Verifikation des Regelungsverhaltens durch einen Anwender erfolgen kann.

Nach der Ermittlung der Regelparameter kann das Regelungsverhalten des Hydrauliksystems verifiziert werden, indem sprungartige Änderungen des Soll-Systemdrucks vorgegeben werden, und daraufhin das Verhalten des Hydrauliksystems, in diesem Falle die Sprungantwort des Ist-Systemdrucks beobachtet wird. Somit kann bewertet werden, ob die automatisch parametrierte Druckregelung den Anforderungen des Bedieners entspricht, und gegebenenfalls das Teilverfahren zur Regelungsauslegung mit einer anderen Regelungsstruktur oder einer geänderten Anstiegszeit erneut gestartet werden.

Die Regelungseinheit kann in den Servoantrieb, d.h. dezentral integriert sein oder auch in einer dem Servoantrieb übergeordneten Steuereinheit, z.B. als eigenständige Bibliotheksfunktion auf der Steuerung, d.h. zentral, integriert sein.

Das erfindungsgemäße Verfahren zur Bestimmung der Regelungsparameter kann jederzeit während des regulären Betriebs neu gestartet werden und auch während des Prozesses auf Veränderungen der Prozessrandbedingungen (z.B. Temperaturänderungen, Leckageveränderungen, Abnützungen am Hydraulikschaltventil, Änderung Schlauchlängen o.ä.) die Regelungsparameter nachjustieren.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1 ein Hydrauliksystem mit einem allgemeinen hydraulischen Verbraucher,

Fig.2a ein Über- und Unterschwingen des Ist-Systemdrucks,

Fig. 2b einen beispielhaften gewünschten Verlauf des Ist-Systemdrucks,

Fig. 3 eines Hydrauliksystem mit einem Differentialhydraulikzylinder als hydraulischen Verbraucher,

Fig. 4a einen zeitlichen Verlauf einer Soll-Drehzahl,

Fig. 4b einen zeitlichen Verlauf eines Ist-Systemdrucks,

Fig. 5 einen zeitlichen Verlauf eines Ist-Systemdrucks als Antwort auf einen sprunghaften zeitlichen Verlauf eines Soll-Systemdrucks.

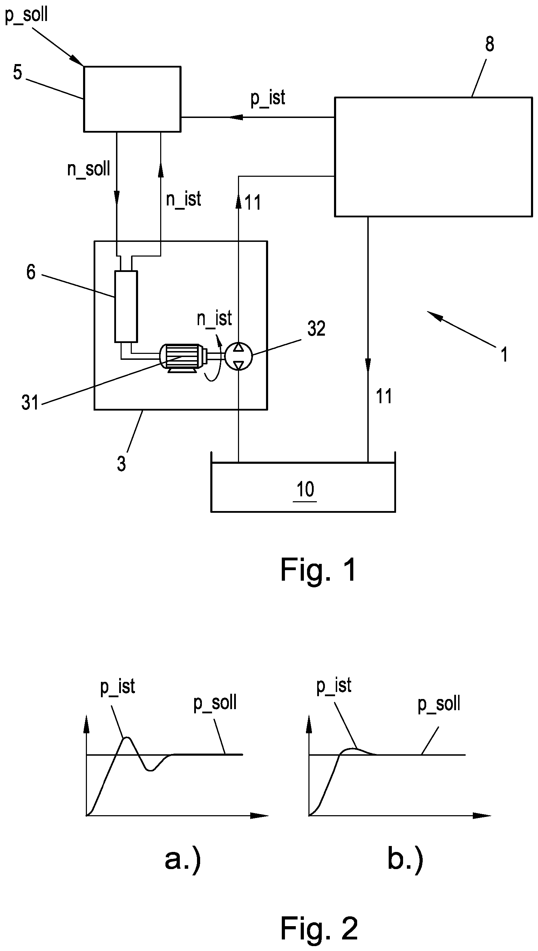

In Fig. 1 ist ein beispielhaftes Hydrauliksystem 1 dargestellt. Ein hydraulischer Verbraucher 8 weist einen Ist-Systemdruck p_ist auf, welcher über eine Ist-Drehzahl n_ist eines Servoantriebs 3 reguliert wird. Der Servoantrieb 3 setzt sich aus einem Motor 31 und einer Pumpe 32 zusammen. In Fig. 1 ist ein offener Hydraulikkreislauf zu sehen, d.h. dass die Pumpe 32 ein Medium 11, z.B. Hydraulikflüssigkeit, aus einem (meist drucklosen) Tank 10 fördert und das Medium 11 vom hydraulischen Verbraucher 8 zurück in den Tank 10 gelangt. Dadurch wird der Ist-Systemdruck p_ist im hydraulischen Verbraucher 8 beeinflusst.

Der Steuerungseinheit 5, z.B. eine SPS, wird beispielsweise durch einen Benutzer oder ein Programm der Soll-Systemdruck p_soll vorgegeben. Eine Regelung der Soll-Drehzahl n_soll aus dem Ist-Systemdruck p_ist und dem Soll-Systemdruck p_soll erfolgt über einen Druckregler, welcher hier auf der Steuerungseinheit 5 implementiert ist. Dazu wird der Ist-Systemdruck p_ist ebenso der Steuerungseinheit 5 zugeführt. Weiters wird die Ist-Drehzahl des Servoantriebs 3 über einen Drehzahlregler geregelt, welcher die Soll-Drehzahl n_soll vom Druckregler, also hier von der Steuerungseinheit 5 erhält. Der Drehzahlregler hingegen ist hier auf der Regelungseinheit 6 implementiert. Die Regelungseinheit 6 kann, z.B. durch einen ACOPOS Servoverstärker repräsentiert werden, welcher dem Servoantrieb 3 den notwendigen Strom zur Verfügung stellt, der notwendig ist um der vorgegebenen Soll-Drehzahl n_soll zu folgen. Sowohl der Druckregler als auch der Drehzahlregler können wie bereits erwähnt an beliebiger Stelle des Hydrauliksystems implementiert sein. Es ist z.B. auch möglich dass die Druckregelung auf der Steuerungseinheit und nur die Drehzahlregelung am Servoantrieb 3 erfolgt. Der Servoantrieb 3 fördert das Medium 11 abhängig von der Ist-Drehzahl p_ist und regelt somit den Ist-Systemdruck p_ist im hydraulischen Verbraucher 8. Bislang wurden nach dem Stand der Technik die Regelungsparameter der Regelungseinheit 6 manuell und iterativ eingestellt. Es soll exemplarisch eine mögliche manuelle Einstellung der Regelungsparameter einer als PID Regler ausgelegten Regelungseinheit 6 beschrieben werden, wobei als Regelungsparameter des PID-Reglers bekanntermaßen ein Verstärkungsfaktor $K_P$, eine Integrationszeitkonstante $T_I$ und eine Differentiationszeitkonstante $T_D$ bestimmt werden. Dabei wird zu Beginn ein Druckfilter geeignet parametriert, d.h. eine Filterzeit $T_f$, ermittelt, mit dem der gemessene Ist-Systemdruck p_ist gefiltert wird. Von Drucksensoren gelieferte Signale weisen meist ein überlagertes Rauschen auf, die z.B. aus Einstreuungen aus der Umgebung resultieren. Dieses Rauschen verursacht bei der Regelung des Ist-Drucks unangenehme Geräusche, wird über den Druckregler direkt an den Drehzahlregler weitergegeben und wirkt sich somit auf die Ist-Drehzahl aus. Damit ist das Rauschen nicht nur hörbar, sondern hat auch weitere negative Einflüsse, z.B. auf die Lebensdauer von Komponenten. Das Druckfilter hat normalerweise die Charakteristik eines Tiefpasses 1. Ordnung. Wird die Grenzfrequenz dieses Druckfilters zu klein gewählt, wird bereits bei kleinen Frequenzen eine hohe Dämpfung erreicht, womit Information bei raschen Druckänderungen verloren gehen und die Regelung träger wird. Wird die Filterzeit $T_f$ zu klein gewählt, so werden Störungen des Ist-Systemdrucks p_ist zu wenig unterdrückt, was dazu führt, dass der Servoantrieb 3 unruhig läuft. Eine zu hohe Filterzeit $T_f$ andererseits verursacht eine trägere Regelung des Ist-Systemdrucks p_ist. Es wird weiters mit der Festlegung eines Initialwerts des Verstärkungsfaktors $K_P$ begonnen. Hierzu wird ein gewünschter Soll-Systemdruck p_soll eingestellt wird und der hydraulische Verbraucher 8 in einen Ausgangszustand gebracht, z.B. indem ein Kolben des hydraulischen Verbrauchers 8 in eine Anschlagsposition gebracht wird. Anschließend wird der Verstärkungsfaktors $K_P$ sukzessive erhöht, bis sich für den Ist-Systemdruck p_ist eine Schwingung, beispielsweise eine sinusförmige Schwingung um den Soll-Systemdruck p_soll, ergibt.

Diese Schwingung ist z.B. durch ein lauteres Motorgeräusch des Servomotors 3 als zuvor erkennbar, da eine Schwingung des Ist-Systemdrucks p_ist sich auch in der Ist-Drehzahl n_ist bemerkbar macht. Eine Schwingung des Ist-Systemdrucks p_ist ist primär im Ist-Drucksignal, welches durch einen Sensor gemessen wird, sichtbar. Da der Ist-Systemdruck direkt mit der Ist-Drehzahl über die Systemdynamik zusammenhängt wird diese dann auch schwingen. Daraufhin wird der Verstärkungsfaktors $K_P$ um 20% reduziert. Sollte weiterhin eine Schwingung des Ist-Systemdrucks p_ist bemerkbar sein, so wird der Verstärkungsfaktors $K_P$ weiterhin sukzessive reduziert bis keine Schwingung bemerkbar ist. Daraufhin wird ein Initialwert der Integrationszeitkonstante $T_I$ des Druckreglers justiert. Dazu wird ein gewünschter Soll-Systemdruck p_soll eingestellt, abermals der hydraulische Verbraucher 8 in eine Ausgangsposition gebracht und Sprünge des Soll-Systemdrucks aufgeschaltet. Anschließend wird die Integrationszeitkonstante $T_I$ sukzessive verkleinert, bis sich ein Unterschwingen des Ist-Systemdrucks p_ist, beispielhaft dargestellt in Fig. 2a, ergibt und daraufhin die Integrationszeitkonstante $T_I$ um 10% erhöht. Sollte sich bereits mit dem Initialwert ein Unterschwingen ergeben, so wird Integrationszeitkonstante $T_I$ sukzessive erhöht bis das Unterschwingen an der Ist-Drehzahl n_ist verschwindet. Ein geeigneter Startwert für die Integrationszeitkonstante $T_I$ wäre beispielsweise $T_I$ = 0.1 s. Auch für die Differentiationszeitkonstante $T_D$ wird ein Initialwert gesetzt und daraufhin die Differentiationszeitkonstante $T_D$ sukzessive erhöht, bis kaum mehr ein Überschwingen des Ist-Systemdrucks p_ist zu erkennen ist. Sollte das Überschwingen der des Ist-Systemdrucks p_ist bereits mit dem Initialwert der Differentiationszeitkonstante $T_D$ zu stark unterdrückt werden, so wird die Differentiationszeitkonstante $T_D$ sukzessive verkleinert, bis das Überschwingen kaum erkennbar ist, beispielhaft dargestellt in Fig. 2b. Sollten beim Erhöhen der Differentiationszeitkonstante $T_D$ Schwingungen auftreten, können diese auch mit einer Justierung einer Filterzeitkonstante des Differenzierers $T_1$ gedämpft werden. Somit ist eine erste Bestimmung der Regelungsparameter erfolgt. Im laufenden Betrieb müssen jedoch immer wieder Nachjustierungen, z.B. nach dem eben erwähnten Muster durchgeführt werden. Nachteilig ist abgesehen vom enormen Zeitaufwand für die Einstellung der Regelungsparameter, dass trotz ausführlicher Dokumentation die konkrete Parametrierung der Regelungsparameter stark vom Anwender abhängt.

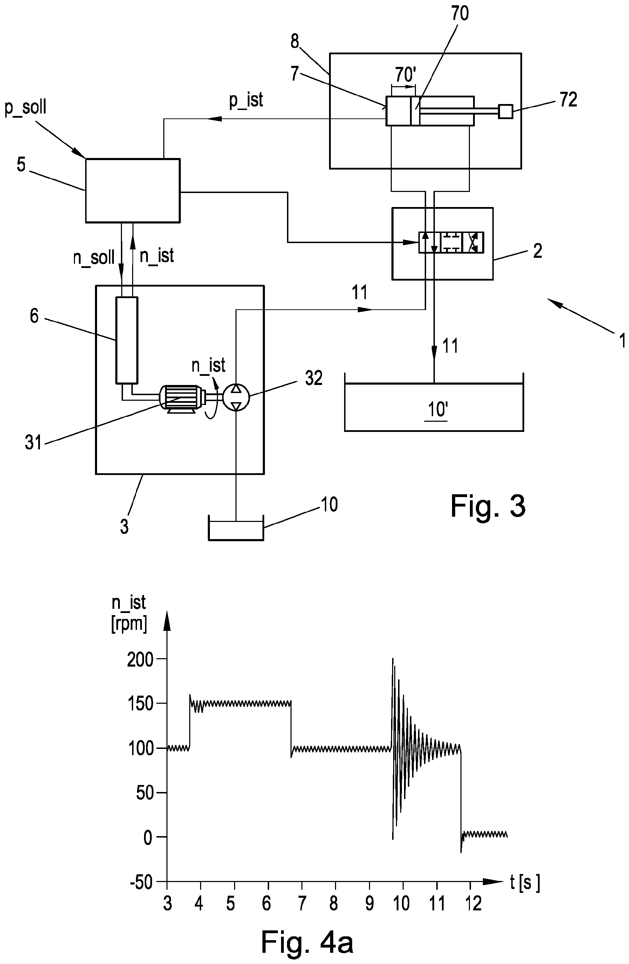

In Fig. 3 ist eine spezielle Ausführung eines Hydrauliksystem 1 dargestellt. Hier ist der hydraulischer Verbraucher 8 als Differentialhydraulikzylinder 7, der mit einem Schaltventil 2 verbunden ist realisiert. Das Schaltventil 2 ist weiters sowohl mit einem Servoantrieb 3 (bestehend aus einem Motor 31 und einer Pumpe 32) als auch mit einem Tank 10 verbunden. Wie bereits hinsichtlich der allgemeinen Ausgestaltung aus Fig. 1 erwähnt, ist auch in Fig. 3 ein offener Kreislauf des Hydrauliksystems 1 zu sehen. In einem offenen Kreislauf wird mittels der Pumpe 32 des Servoantriebs 4 ein Medium 11 aus einem Tank 4 (der meist einen atmosphärischen Druck aufweist) gefördert, woraufhin das Medium 11 vom hydraulischen Verbraucher 8, in den Tank 4 zurückgeführt wird. Das gegenständige Verfahren beschränkt sich jedoch nicht nur auf Hydrauliksysteme 1 mit offenen Hydraulikkreisläufen, sondern ist auch auf Hydrauliksysteme 1 mit geschlossenen Hydraulikkreisläufen, d.h. mit geschlossenen Tanks 11, die Druckspeicher repräsentieren, anwendbar. Der Differentialhydraulikzylinder 7 beinhaltet einen Kolben 70, dessen Position 70' im Differentialhydraulikzylinder 7 vom Ist-Systemdruck p_ist abhängig ist. Der Ist-Systemdruck p_ist des Differentialhydraulikzylinder 7 wird über die Ist-Drehzahl n_ist des Servoantriebs 3 reguliert. Die Soll-Drehzahl n_soll wiederum wird dem Servoantrieb 3 von einer Steuerungseinheit 5 vorgegeben. Die Regelungseinheit 6 regelt wiederum die Ist-Drehzahl n_ist auf die von der Steuerungseinheit 5 zur Verfügung gestellte Soll-Drehzahl n_soll. Am Beispiel des Differentialhydraulikzylinders 7 ermöglicht die präzise Regelung des Ist-Systemdruck p_ist zum Beispiel eine definierte Kraft mittels der mit dem Kolben 70 verbundenen Kolbenstange 72 aufzubringen. Es könnte alternativ zu einem Differentialhydraulikzylinder 7 z.B. auch ein Hydromotor als hydraulischer Verbraucher 8 dienen, der ein bestimmtes Moment zur Verfügung stellt. Die Regelungseinheit 6 des hydraulischen Verbrauchers 8, hier dieses servohydraulischen Antriebsstranges, kann sowohl zentral, d.h. wie in Fig. 3 dargestellt direkt am Servoantrieb 3, als auch dezentral in der Steuereinheit 5 angebracht sein.

Mittels der Steuereinheit 5 wird der Ist-Systemdruck p_ist im Differentialhydraulikzylinder 7 erfasst und mithilfe der Regelungseinheit 6 die Soll-Drehzahl n_soll für den Servoantrieb 4 berechnet, um einen gewünschten Soll-Systemdruck p_soll im Differentialhydraulikzylinder 7 einzustellen. Der Ist-Systemdruck p_ist könnte natürlich auch direkt unter Verwendung der Regelungseinheit 6 erfasst und verarbeitet werden.

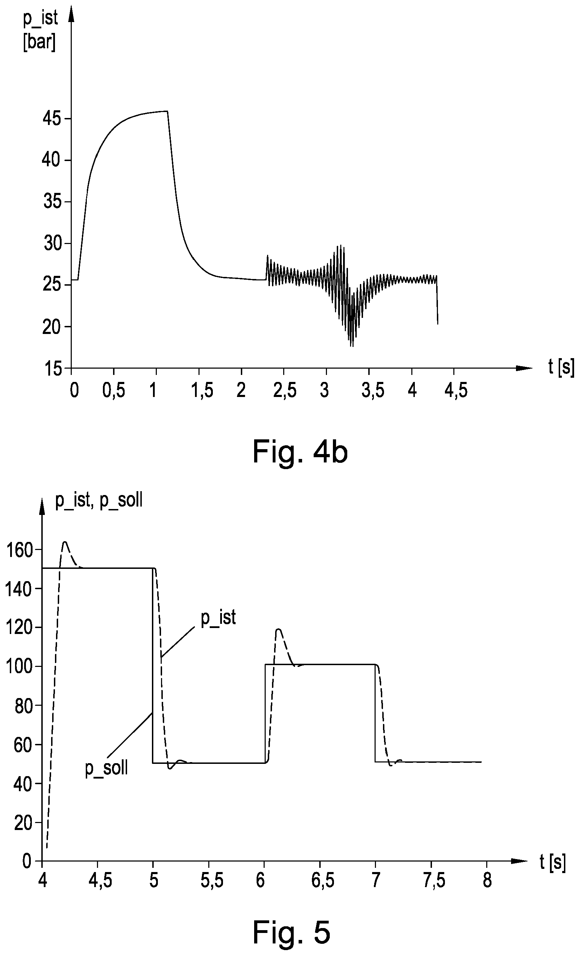

Zu Beginn des erfindungsgemäßen Verfahrens zur Ermittlung der Regelungsparameter wird in Fig. 3 der Kolben 70 des Differentialhydraulikzylinders 7 in eine gewünschte Position 70', z.B. eine Endlage verfahren, indem der Soll-Drehzahl n_soll eine konstante Anfangsdrehzahl n0 beaufschlagt wird. Damit erreicht im Differentialhydraulikzylinder 7 des Hydrauliksystems 1 der Ist-Systemdruck p_ist einen Anfangsdruck p0, womit gewissermaßen ein Arbeitspunkt eingestellt wird. Es sei nochmals darauf hingewiesen, dass statt dem hier beschriebenen Differentialhydraulikzylinder 7 natürlich auch jeder andere hydraulische Verbraucher denkbar ist. Das Hydrauliksystem 1 wird durch Aufschalten eines Anregungssignals n1 auf die Soll-Drehzahl n_soll angeregt. Ein möglicher zeitlicher Verlauf der Ist-Drehzahl n_ist nach Beaufschlagung der Soll-Drehzahl mit einem Anregungssignal n1 ist in Fig. 4a dargestellt, wobei auf der horizontalen Achse die Zeit t in Sekunden aufgetragen ist und auf der vertikalen Achse die Ist-Drehzahl n_ist. Das Anregungssignal soll die Dynamik der Regelstrecke, also des Hydrauliksystems 1, anregen. Während dieser Anregung wird der Ist-Systemdruck p_ist im Differentialhydraulikzylinder gemessen. Ein möglicher sich einstellender zeitlicher Verlauf des Ist-Systemdrucks p_ist ist in Fig. 4b abgebildet, wobei auf der horizontalen Achse die Zeit t in Sekunden aufgetragen ist und auf der vertikalen Achse der Ist-Systemdruck p_ist in bar. Aus dem zeitlichen Verlauf des Ist-Systemdrucks p_ist und der Ist-Drehzahl n_ist bzw. der Soll-Drehzahl n_soll, die ebenfalls gemessen oder vom Servoantrieb 3 zur Verfügung gestellt werden kann, wird eine Übertragungsfunktion Gp/n(z) zur Beschreibung der Systemdynamik abgeschätzt (im vorliegenden Fall beispielhaft eine zeitdiskrete (z-Bereich) Übertragungsfunktion, z.B. 5. Ordnung. Es können natürlich auch zeitkontinuierliche (s-Bereich) Übertragungsfunktionen herangezogen werden), beispielsweise unter Anwendung der Methode der kleinsten Fehlerquadrate. Die zugrundeliegende Übertragungsfunktion Gp/n(z) lautet hier beispielsweise:

$$G_{\frac{p}{n}}(z) = \frac{2.399 * 10^{-4} z^3 - 6.894 * 10^{-5} z^2 - 1.079 * 10^{-4} z - 5.007 * 10^{-6}}{z^5 - 2.647 z^4 + 2.197 z^3 - 0.3359 z^2 - 0.3038 z + 0.08941}$$

Es ist nun beispielsweise die Struktur der Übertragungsfunktion Gp/n(z) vorgegeben, hier 5.Ordnung, die Parameter der Übertragungsfunktion Gp/n(z) sind aber unbekannt. Das Optimierungsproblem wird mit den Fehlerquadraten (Abweichung zwischen den gemessenen und den aus der Parameter der Übertragungsfunktion Gp/n(z) berechneten Werte) als Zielfunktion (Fehler wird minimiert) modelliert, um die Parameter der Übertragungsfunktion Gp/n(z) zu ermitteln. Die unbekannten Parameter werden z.B. mithilfe des in der Literatur hinreichend beschriebenen LeastSquares Verfahrens (Methode der kleinsten Fehlerquadrate) geschätzt. Ein Abbruchkriterium wird hier nicht benötigt, da es sich um kein iteratives Verfahren handelt.

Die Dynamik des Systems wird somit durch das Ein-Ausgangsverhalten des Systems beschrieben. Die Dynamik des Druckreglers beschreibt das Verhalten von Soll-Systemdruck auf den Ist-Systemdruck.

Auf Basis dieser Übertragungsfunktion Gp/n(z) wird ein PI-Regler mit einem Verstärkungsfaktor Kp und einer Integrationszeitkonstante $T_I$ als Regelungsparameter, unter Anwendung eines bekannten Frequenzkennlinienverfahrens parametriert, wobei keine weitere Filterung vorgenommen wird. So werden Anforderungen an den geschlossenen Regelkreis auf Anforderungen im Frequenzbereich übersetzt und dort die Regelungsparameter berechnet. Die Vorgabe dieser Bedingungen an den geschlossenen Regelkreis ist für den Anwender anschaulicher als die direkte Vorgabe der Regelungsparameter. Im angeführten Ausführungsbeispiel wurde als eine Anforderung an den geschlossenen Kreis die Anstiegszeit $t_r$ derart festgelegt. Das bedeutet, dass nach Anlegen eines Sprungs des Soll-Systemdrucks der Ist-Systemdruck innerhalb der Anstiegszeit $t_r$, z.B. 0.05 s den Sprungwert des Soll-Systemdrucks erreichen muss. Als weitere Anforderung wurde ein Überschwingen ue=0% festgelegt. Wie im Rahmen des Frequenzkennlinienverfahrens üblich werden über Näherungsbeziehungen die Anforderungen an den geschlossenen Kreis in Anforderungen des offenen Kreises (ohne Regelung) übersetzt. Im Frequenzgang des offenen Kreises werden die Regelungsparameter Verstärkungsfaktor $K_P$ und Integrationszeitkonstante $T_I$ berechnet und ergeben sich beispielsweise zu

$$Kp = 42.42 \; \frac{rpm}{bar}$$

und $T_I$ = 0.085 s. Nach der Berechnung der Regelungsparameter kann eine erfolgreiche Parametrisierung der Regelungsparameter durch Vorgabe von Sprüngen des Soll-Systemdrucks p_soll verifiziert werden. Wie in der Fig. 5 ersichtlich ist, folgt der Ist-Systemdruck p_ist dem vorgegebenen Soll-Systemdruck p_soll. Da beim Frequenzkennlinienverfahren Näherungsbeziehungen zwischen einem geschlossenen und offenen Regelkreis herangezogen werden, kann es beim tatsächlichen Verhalten des geschlossenen Regelkreises zu Abweichungen kommen. So kann selbst bei einem gewünschten geringen oder nicht vorhandenen Überschwingen, z.B. bei Verwendung eines PI-Reglers in Kombination mit einer kurzen Anstiegszeit, im realen System ein höheres Überschwingen ersichtlich sein, wie in Fig. 5 ersichtlich. Um dieses Überschwingen zu verringern oder auch gänzlich zu unterdrücken, kann z.B. statt dem PI-Regler ein PID-Regler erfindungsgemäß parametriert werden.

Aufgrund der allgemein formulierten Übertragungsfunktion Gp/n(z) mit mehreren Polstellen und Nullstellen können auch komplexere Regler als PID-Regler entworfen werden. So können auch schwingfähige Übertragungsfunktionen mit konjugiert komplexen Polen identifiziert werden. Derart identifizierte Resonanzfrequenzen können dann beispielsweise mittels eines Notch-Filters kompensiert werden. Es können damit weiters auch Antiresonanzfrequenzen identifiziert werden, welche in weiterer Folge z.B. mithilfe eines BI-Quad-Filters kompensiert werden können.

## Patentansprüche

1. Verfahren zur Bestimmung von Regelungsparametern ($K_P$, $T_t$, $T_D$, $T_F$) einer Regelungseinheit (6) eines Hydrauliksystems (1), **dadurch gekennzeichnet, dass** ein Ist-Systemdruck (p_ist) eines hydraulischen Verbrauchers (8) des Hydrauliksystems (1) durch eine vorgegebene Soll-Drehzahl (n_soll) eines Servoantriebs (3), umfassend einen Motor (31) und eine Pumpe (32), geregelt wird, wobei eine Ist-Drehzahl (n_ist) des Servoantriebs (3) der vorgegebenen Soll-Drehzahl (n_soll) folgt, wobei der Soll-Drehzahl (n_soll) ein Anregungssignal (n1) aufgeschaltet wird und der sich dabei einstellende Ist-Systemdruck (p_ist) gemessen wird, **dass** aus der Ist-Drehzahl (n_ist) und dem Ist-Systemdruck (p_ist) oder aus der Soll-Drehzahl (n_soll) und dem Ist-Systemdruck (p_ist) die Dynamik des Hydrauliksystems (1) ermittelt wird, **und dass** aus der ermittelten Dynamik die Regelungsparameter ($K_P$, $T_t$, $T_D$, $T_F$) berechnet werden.

2. Verfahren nach Anspruch 1, **dadurch gekennzeichnet, dass** der Soll_Drehzahl (n_soll) vor der Beaufschlagung mit dem Anregungssignal (n1) eine konstante Anfangsdrehzahl (n0) vorgegeben wird, woraufhin sich im Hydrauliksystem (1) als Ist-Systemdruck (p_ist) ein Anfangsdruck (p0) einstellt.

3. Verfahren nach Anspruch 1 oder 2, **dadurch gekennzeichnet, dass** der Ist-Systemdruck (p_ist) einen Druck eines Hydraulikzylinders oder eines Hydromotors darstellt.

4. Verfahren nach einem der Ansprüche 1 bis 3, **dadurch gekennzeichnet, dass** als Anregungssignal (n1) ein Rechtecksignal, ein harmonisches Signal - vorzugweise mit steigender Frequenz, Impulse oder ein Mischsignal daraus verwendet wird.

5. Verfahren nach einem der Ansprüche 1 bis 4, **dadurch gekennzeichnet, dass** die Dynamik des Hydrauliksystems (1) mittels einer Übertragungsfunktion (Gp/n(z)) des Hydrauliksystems (1) beschrieben wird.

6. Verfahren nach Anspruch 5, **dadurch gekennzeichnet, dass** die Übertragungsfunktion (Gp/n(z)) mittels einer Fast Fourier Transformation (FFT) ermittelt wird.

**7.** Verfahren nach Anspruch 5 oder 6, **dadurch gekennzeichnet, dass** die Parameter der Übertragungsfunktion (Gp/n(z)) mittels eines Least Square-Verfahrens angenähert wird.

**8.** Verfahren nach einem der Ansprüche 1 bis 7, **dadurch gekennzeichnet, dass** die Regelparameter ($K_P$, $T_t$, $T_D$, $T_F$) mittels eines Frequenzkennlinienverfahrens errechnet werden.

**9.** Verfahren nach Anspruch 8, **dadurch gekennzeichnet, dass** dem Frequenzkennlinienverfahren Vorgabeparameter der Sprungantwort, vorzugsweise Anstiegszeit und Überschwingen, vorgegeben werden, die vorzugsweise ein Überschwingen (ue) und eine Anstiegszeit ($t_r$) der Sprungantwort umfassen.

**10.** Verfahren nach einem der Ansprüche 1 bis 9, **dadurch gekennzeichnet, dass** nach der Ermittlung der Regelparameter ($K_P$, $T_t$, $T_D$, $T_F$) das Regelungsverhalten der Regelungseinheit (4) verifiziert wird, indem sprungförmige Änderungen des Systemdrucks (p_soll) vorgegeben werden und die eine Sprungantwort ermittelt wird.

**11.** Verfahren nach Anspruch 10, **dadurch gekennzeichnet, dass** die Verifikation des Regelungsverhaltens der Regelungseinheit (4) durch einen Anwender erfolgt.

**12.** Verfahren nach einem der Ansprüche 1 bis 11, **dadurch gekennzeichnet, dass** aus der ermittelten Dynamik zusätzlich ein Kompensationsfilter für die Regelungseinheit (6) parametriert wird.

**13.** Hydrauliksystem (1) umfassend einen Servoantrieb (3) mit einem Motor (31) und einer Pumpe (32), wobei der Servoantrieb(3) eine von einer Steuerungseinheit (5) vorgegebene Soll-Drehzahl (n_soll) aufweist, wobei eine Ist-Drehzahl (n_ist) des Servoantriebs (3) der vorgegebenen Soll-Drehzahl (n_soll) folgt, und umfassend einen hydraulischen Verbraucher (8) der einen Ist-Systemdruck (p_ist) aufweist, welcher durch die vorgegebene Soll-Drehzahl (n_soll) geregelt wird, wobei eine Regelungseinheit (4) vorgesehen ist, die ausgestaltet ist der Soll-Drehzahl (n_soll) ein Anregungssignal (n1) aufzuschalten und den sich dabei einstellenden Ist-Systemdruck (p_ist) des Hydrauliksystems (1) zu messen, aus der Ist-Drehzahl (n) und dem Ist-Systemdruck (p_ist) oder aus der Soll-Drehzahl (n_soll) und dem Ist-Systemdruck (p_ist) die Dynamik des Hydrauliksystems (1) zu ermitteln und aus der ermittelten Dynamik die Regelungsparameter ($K_P$, $T_t$, $T_D$, $T_F$) der Regelungseinheit (4) zu berechnen.

**14.** Hydrauliksystem nach Anspruch 13, **dadurch gekennzeichnet, dass** die Regelungseinheit (4) in den Servoantrieb (3) integriert ist.

**15.** Hydrauliksystem nach Anspruch 13, **dadurch gekennzeichnet, dass** die Regelungseinheit (4) in einer dem Servoantrieb (3) übergeordneten Steuereinheit (5) integriert ist.

**Claims**

**1.** A method for determining control parameters ($K_P$, $T_t$, $T_D$, $T_F$) of a control unit (6) of a hydraulic system (1), **characterized in that** an actual system pressure (p_ist) of a hydraulic load (8) of the hydraulic system (1) being controlled by a predetermined target speed (n_soll) of a servo drive (3) comprising a motor (31) and a pump (32), wherein an actual speed (n_ist) of the servo drive (3) follows the predetermined target speed (n_soll), wherein an excitation signal (n1) is applied to the target speed (n_soll) and the resulting actual system pressure (p_ist) is measured, **in that** the dynamics of the hydraulic system (1) is determined from the actual speed (n_ist) and the actual system pressure (p_ist) or from the target speed (n_soll) and the actual system pressure (p_ist), **and in that** the control parameters ($K_P$, $T_t$, $T_D$, $T_F$) are calculated from the determined dynamics.

**2.** The method according to claim 1, **characterized in that** a constant initial speed (n0) is predetermined for the target speed (n_soll) before the application of the excitation signal (n1), at which point an initial pressure (p0) results in the hydraulic system (1) as the actual system pressure (p_ist).

**3.** The method according to claim 1 or 2, **characterized in that** the actual system pressure (p_ist) represents a pressure of a hydraulic cylinder or a hydraulic motor.

**4.** The method according to any of claims 1 to 3, **characterized in that** a square wave signal, a harmonic signal, preferably with increasing frequency, pulses, or a mixed signal is used as the excitation signal (n1).

5. The method according to any of claims 1 to 4, **characterized in that** the dynamics of the hydraulic system (1) is described by means of a transfer function (Gp/n(z)) of the hydraulic system (1).

6. The method according to claim 5, **characterized in that** the transfer function (Gp/n(z)) is determined by means of a Fast Fourier Transformation (FFT).

7. The method according to claim 5 or 6, **characterized in that** the parameters of the transfer function (Gp/n(z)) are approximated by a method of least squares.

8. The method according to any of claims 1 to 7, **characterized in that** the control parameters ($K_P$, $T_t$, $T_D$, $T_F$) are calculated by means of a frequency characteristic method.

9. The method according to claim 8, **characterized in that** default parameters of the step response, preferrably rise time and overshoot, are predetermined for the frequency characteristic method, which preferably comprise an overshoot (ue) and a rise time ($t_r$) of the step response.

10. The method according to any of claims 1 to 9, **characterized in that,** after determining the control parameters ($K_P$, $T_t$, $T_D$, $T_F$), the control behavior of the control unit (4) is verified by step-shaped changes in the system pressure (p_soll) being predetermined and a step response being determined.

11. The method according to 10, **characterized in that** a user carries out the verification of the control behavior of the control unit (4).

12. The method according to any of claims 1 to 11, **characterized in that** a compensation filter for the control unit (6) is additionally parameterized from the determined dynamics.

13. A hydraulic system (1) comprising a servo drive (3) with a motor (31) and a pump (32) wherein the servo drive (3) which has a target speed (n_soll) predetermined by a control unit (5), wherein an actual speed (n_ist) of the servo drive (3) follows the predetermined target speed (n_soll), and comprising a hydraulic load (8) which has an actual system pressure (p_ist) which is controlled by the predetermined target speed (n_soll), wherein a control unit (4) is provided which is configured to apply an excitation signal (n1) to the target speed (n_soll) and to measure the resulting actual system pressure (p_ist) of the hydraulic system (1), to determine the dynamics of the hydraulic system (1) from the actual speed (n) and the actual system pressure (p_ist) or from target speed (n_soll) and the actual system pressure (p_ist), and to calculate the control parameters ($K_P$, $T_t$, $T_D$, $T_F$) of the control unit (4) from the determined dynamics.

14. The hydraulic system according to claim 13, **characterized in that** the control unit (4) is integrated in the servo drive (3).

15. The hydraulic system according to claim 13, **characterized in that** the control unit (4) is integrated in a operating unit (5) which is superordinate to the servo drive (3).

**Revendications**

1. Procédé de détermination des paramètres de régulation ($K_P$, $T_t$, $T_D$, $T_F$) d'une unité de régulation (6) d'un système hydraulique (1), **caractérisé en ce qu'**une pression de système réelle (p_ist) d'un consommateur hydraulique (8) du système hydraulique (1) est régulée par une vitesse de rotation de consigne (n_soll) spécifiée d'un entraînement asservi (3), comprenant un moteur (31) et une pompe (32), une vitesse de rotation réelle (n_ist) de l'entraînement asservi (3) suivant la vitesse de rotation de consigne (n_soll) spécifiée, un signal d'excitation (n1) étant appliqué à la vitesse de rotation de consigne (n_soll) et la pression de système réelle (p_ist) résultante étant mesurée, **en ce que** la dynamique du système hydraulique (1) est déterminée à partir de la vitesse de rotation réelle (n_ist) et de la pression de système réelle (p_ist) ou à partir de la vitesse de rotation de consigne (n_soll) et de la pression de système réelle (p_ist) **et en ce que** les paramètres de régulation ($K_P$, $T_t$, $T_D$, $T_F$) sont calculés à partir de la dynamique déterminée.

2. Procédé selon la revendication 1, **caractérisé en ce qu'**une vitesse de rotation initiale constante (n0) est spécifiée pour la vitesse de rotation de consigne (n_soll) avant l'application du signal d'excitation (n1), après quoi une pression initiale (p0) s'ajuste dans le système hydraulique (1) en tant que pression de système réelle (p_ist).

3. Procédé selon la revendication 1 ou 2, **caractérisé en ce que** la pression de système réelle (p_ist) représente une pression d'un cylindre hydraulique ou d'un moteur hydraulique.

4. Procédé selon l'une des revendications 1 à 3, **caractérisé en ce qu'**un signal carré, un signal harmonique, de préférence à fréquence croissante, des impulsions ou un signal mixte de ceux-ci est utilisé comme signal d'excitation (n1).

5. Procédé selon l'une des revendications 1 à 4, **caractérisé en ce que** la dynamique du système hydraulique (1) est décrite au moyen d'une fonction de transfert (Gp/n(z)) du système hydraulique (1).

6. Procédé selon la revendication 5, **caractérisé en ce que** la fonction de transfert (Gp/n(z)) est déterminée au moyen d'une transformation de Fourier rapide (FFT).

7. Procédé selon la revendication 5 ou 6, **caractérisé en ce que** les paramètres de la fonction de transfert (Gp/n(z)) sont approximés au moyen d'une méthode des moindres carrés.

8. Procédé selon l'une des revendications 1 à 7, **caractérisé en ce que** les paramètres de régulation ($K_P$, $T_t$, $T_D$, $T_F$) sont calculés au moyen d'un procédé de caractéristique de fréquence.

9. Procédé selon la revendication 8, **caractérisé en ce que** des paramètres spécifiés de la réponse échelonnée, de préférence le temps de montée et le dépassement, sont spécifiés pour le procédé de caractéristique de fréquence, lesquels paramètres comprennent de préférence un dépassement (ue) et un temps de montée ($t_r$) de la réponse échelonnée.

10. Procédé selon l'une des revendications 1 à 9, **caractérisé en ce qu'**après la détermination des paramètres de régulation ($K_P$, $T_t$, $T_D$, $T_F$), le comportement de régulation de l'unité de régulation (4) est surveillé en spécifiant des changements par échelons de la pression de système de consigne (p_soll) et en déterminant une réponse échelonnée.

11. Procédé selon la revendication 10, **caractérisé en ce que** le comportement de régulation de l'unité de régulation (4) est surveillé par un utilisateur.

12. Procédé selon l'une des revendications 1 à 11, **caractérisé en ce qu'**un filtre de compensation destiné à l'unité de régulation (6) est en outre paramétré à partir de la dynamique déterminée.

13. Système hydraulique (1) comprenant un entraînement asservi (3) comportant un moteur (31) et une pompe (32), l'entraînement asservi (3) présentant une vitesse de rotation de consigne (n_soll) spécifiée par une unité de commande (5), une vitesse de rotation réelle (n_ist) de l'entraînement asservi (3) suivant la vitesse de rotation consigne (n_soll) spécifiée, et comprenant un consommateur hydraulique (8) qui présente une pression de système réelle (p_ist), laquelle est régulée par la vitesse de rotation de consigne (n_soll) spécifiée, une unité de régulation (4) étant prévue, laquelle est conçue pour appliquer un signal d'excitation (n1) à la vitesse de rotation de consigne (n_soll) et pour mesurer la pression de système réelle (p_ist) résultante du système hydraulique (1), pour déterminer, à partir de la vitesse de rotation réelle (n) et de la pression de système réelle (p_ist) ou à partir de la vitesse de rotation de consigne (n_soll) et de la pression de système réelle (p_ist), la dynamique du système hydraulique (1), et pour calculer, à partir de la dynamique déterminée, les paramètres de régulation ($K_P$, $T_t$, $T_D$, $T_F$) de l'unité de régulation (4).

14. Système hydraulique selon la revendication 13, **caractérisé en ce que** l'unité de régulation (4) est intégrée dans l'entraînement asservi (3).

15. Système hydraulique selon la revendication 13, **caractérisé en ce que** l'unité de régulation (4) est intégrée dans une unité de commande (5) supérieure à l'entraînement asservi (3).

p_soll

5

8

p_ist

n_soll

n_ist

11

6

n_ist

32

31

1

3

11

10

Fig. 1

p_ist

p_soll

p_ist

p_soll

a.)

b.)

Fig. 2

Fig. 3

Fig. 4a

Fig. 4b

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19842565 A1
- DE 4446296 A1